# EUROPEAN PATENT SPECIFICATION

(11) **EP 0 670 669 B1**
(45) Date of publication and mention of the grant of the patent: **03.12.1997**
(21) Application number: 94927560.6
(22) Date of filing: 05.09.1994
(51) Int. Cl.: A01G 31/00, E04D 11/00

(54) **SHEET OF MINERAL WOOL FOR SUSTAINING VEGETATION ON ROOFS**
MINERALWOLLEBAHN ZUM TRAGEN VON VEGETATION AUF DÄCHERN
FEUILLE DE LAINE MINERALE DESTINEE A SOUTENIR DES VEGETAUX SUR LES TOITS

(30) Priority: 25.09.1993 DE 9314533 U; 11.11.1993 DE 4338619; 04.08.1994 WO PCT/EP94/02593
(43) Date of publication of application: 13.09.1995
(73) Proprietor: ISOVER SAINT-GOBAIN, F-92400 Courbevoie (FR)
(72) Inventor: KUMMERMEHR, Hans, D-67063 Ludwigshafen (DE); BIHY, Lothar, D-67657 Kaiserslautern (DE)
(74) Representative: KUHNEN, WACKER & PARTNER
(86) International application number: EP9402952
(87) International publication number: WO9508259

(56) References cited:
- EP-A- 0 470 524
- EP-A- 0 485 277
- WO-A-89/01736
- DE-A- 3 844 418
- DE-A- 4 208 733
- DE-C- 4 215 219
- US-A- 5 224 290

## Description

The invention relates to a sheet of mineral wool for sustaining vegetation on roofs of the type described in the preamble portion of claim 1. Such a mineral wool sheet is known for example from DE-A-4,208,733.

As the population density in built-up areas increases, the number of green areas declines very sharply. There is therefore an increasing desire to create new green areas. Planting flat roofs with vegetation is a possibility of creating green areas. This allows ecological systems to be created, even in centres of high population which make the environment visually attractive while at the same time being able to counteract adverse changes caused by dense building.

Sustaining vegetation on roofs is already known and tends to become more frequent with increasingly dense building. For example, EP-A-0,485,277 by the same applicant proposes, as a growth medium for plants, sheets of mineral wool which contain polysacharide products insoluble in cold water, which products impart a high water retention capacity to the sheets for storing rainwater, which is only obtained irregularly in the course of time, for the growth of the plants. In such a growth medium, however, the plants have to be arranged in planting holes so that they are anchored sufficiently until they have struck roots and cannot be carried away by wind or rain.

Even though it is already known from DE-A 3,844,418 to hold seeds in place on a biodegradable support for the purpose of rapid sowing, such seed strips or films only allow germination of the seeds in the correct position, and do not act as a substrate for roots. After the seeds have germinated, the support is no longer required and can therefore biodegrade, since the support is usually placed in humus soils, in which the seedling roots find more anchorage and nutrients. In the case of roof-sustained vegetation, however, biodegradation of the support is not desired, since the roots of the plants must find anchorage in this support.

It is therefore an object of the invention to introduce plants for sustaining vegetation on roofs in such a manner that they can strike roots on sheets of mineral wool used for this purpose in a problem-free manner without undue labour being necessary, it being impossible for the plants to be blown away by wind or washed away by rain.

This object is achieved by a sheet of mineral wool having the features as indicated in the characterizing portion of claim 1. As extensive field trials have shown, suitable parts of plants are, advantageously, shoots which strike roots, in particular sedum shoots. These parts of plants, which are obtained by comminuting sedum plants, which have very modest requirements, are most likely to strike roots, even with extensive irrigation. Time-consuming maintenance of such vegetation-sustained roofs can be dispensed with. As an alternative, or in addition, fully established plants may be held in place. Examples which may be mentioned are rosette plants, such as sempervivum, bulbous plants, such as Iris pumila, or grass species, such as Poa bulbosa. An advantage of such complete plants is mainly the fact that they produce the roof-sustained vegetation in the form of complete plants shortly after the sheet has been laid on the roof.

Other considerable advantages are obtained when the seed used is in the form of parts of plants held in place on the sheet. Such sheets can already be provided with seeds at the manufacturers', so that no further steps for achieving a permanent roof-sustained vegetation with the exception of laying the sheets on the roof and watering them in are required. Particularly suitable as seeds are chives, which germinate readily, have modest requirements and, in particular, produce a bright purple sward when in flower.

The parts of the plants are advantageously held in place by means of an organic adhesive. This organic adhesive must meet a number of requirements. On the one hand, it must make the parts of the plants adhere to the sheet of mineral wool until their roots have penetrated the sheet of mineral wool. Moreover, the organic adhesive must allow diffusion of air and water since the parts of the plants are at least partially coated by the adhesive. A supply, if appropriate through the adhesive, of the parts of the plants with air, water and, if appropriate, nutrients must be guaranteed so that the parts of the plants can also continue their development within the coating of the adhesive and can form, for example, new shoots and roots. Furthermore, the adhesive must be capable of dissolution once the parts of the plants have rooted. However, until the roots of the parts of the plants have penetrated the sheet of mineral wool, the adhesive must be impervious to weather, and in particular, withstand the effects of rain, sun and wind.

Such organic adhesives necessarily contain a binder which acts as a tackifier. Examples of suitable binders are starch or organic polymers which degrade, for example by microorganisms. Starch is thixotropic and therefore well suited for coating the surface of the mineral fibre material and seeds or shoots of plants which are arranged therein, and subsequently holding them in place.

Suitable polymers which meet the above requirements as binders are, in particular, acrylate-based homopolymers and copolymers. Examples of suitable binders which are dispersible in water are copolymers which are composed of acrylic acids and their esters, in which their carboxyl or hydroxyl groups were converted into salts or alcoholates by reaction with basic compounds, such as, for example, KOH, to improve their dispersibility in water. A commercially available binder composed of a polymer is Acronal® dispersion by BASF AG. This binder is composed of an aqueous dispersion of a thermally cross-linkable copolymer based on ethyl acrylate and is free from formaldehyde. The binder can also consist of a combination of starch and such a polymer dispersion to make it more waterproof. If rooting shoots or established plants are introduced as the parts of the plants, it is also possible to use such a polymer dispersion without starch as the binder, and, in this case, the binder should not coat the parts of the plants in the form of a continuous film.

The organic adhesive can furthermore contain fillers and/or fertilizers. Particularly preferred fillers are peat, organic dusts, clay minerals and rock meal. Preferred as filler is peat or the like since it is low in nutrients, despite being an organic substance, and will last for a prolonged period without decomposition. Some organic waste materials, such as grape seeds, bone-meal and the like are less suitable as fillers. It has emerged that such organic fillers biodegrade too rapidly and are converted by microorganisms within a very short period to give mineral fertilizer. Parts of plants, in particular seeds, which have been glued to the sheet of mineral wool using adhesives which contain a large amount of mineral fertilizers have shown poor development, or no development at all, since the parts of the plants were unable to grow in the presence of an excess of nutrients. In contrast, if peat is used as filler, this problem does not exist since peat is very low in nutrients and will biodegrade after a prolonged period only.

The shoots which strike roots and which are preferably employed for extensively sustaining vegetation on roofs, such as, for example, sedum shoots, can also grow on so-called laminated sheets of mineral wool, whose fibres are arranged at right angles to the surface. The advantage of these sheets is that the newly-forming roots can penetrate into the sheet relatively rapidly.

Finally, it is particularly expedient to use those sheets of mineral wool as a growth substrate for the parts of the plants for sustaining vegetation on roofs which contain at least one polysaccharide product which is insoluble in cold water. This results in a higher water retention capacity, while the polysaccharide product simultaneously acts as a useful nutrient for the plants.

In a further preferred embodiment, the surface (2) of the sheet of mineral wool which faces away from the roof is provided with an adhesive base coat. Such an adhesive base coat facilitates holding the parts of the plants in place on the sheets of mineral wool; when rooting shoots or seed is used, in particular, root formation is facilitated and promoted before the roots of the tender plants or the parts of the plants penetrate the sheet of mineral wool itself.

To prepare the sheet of mineral wool according to the invention, which has an improved water retention capacity and is intended for sustaining the vegetation on roofs, the parts of the plants, in particular rooting shoots, seed or else established plants, are mixed with the adhesive and then applied to the sheet.

In some cases, it may be advantageous to apply the parts of the plants, in particular seeds, which have been mixed with adhesive, to the sheet at the site where the sheet of mineral wool has been manufactured, immediately after the sheet of mineral wool has been prepared. Such sheets, which have already been provided with parts of plants at the manufacturer's plant, already form a permanent roof-sustained vegetation, after they have been laid on the roof and irrigated, capable of being provided at the building site when the flat roof is being constructed; this means that no specialists, such as, for example, gardeners, are required to produce such green areas.

As a rule, it is advantageous not to provide the sheet of mineral wool with parts of plants at the manufacturer's, but only at the building site. In these cases, the parts of the plants can be mixed with the adhesive and applied at the building site in a separate operation. This means that the parts of the plants, in particular seeds, can easily be applied to the sheet and irrigated before the sheet is laid on the roof, resulting in successful rooting.

As a rule, however, the sheets of mineral wool will first be laid on the roof and the parts of the plants which have been mixed with the adhesive are subsequently applied. In this case, when the sheets of mineral wool are laid, it is not necessary to take into consideration parts of plants which have been applied already.

As the sheets which do not contain any parts of plants as yet are laid on the roof, it may be advantageous to apply a base coat, which consists of the adhesive without parts of plants, to the sheets immediately prior to applying the parts of the plants which are optionally mixed with adhesive to the sheets. Such an adhesive base coat can also be applied advantageously to the sheets of mineral wool in the course of their manufacture.

In accordance with an embodiment of the invention, the parts of the plants which are mixed with the adhesive are applied to the sheets over a wide area. This can be effected for example manually, by broadcasting or by using a rake or blade, and guarantees uniform distribution of the parts of the plants. This allows a uniform and complete roof-sustained vegetation, in particular when a grass or sedum sward is established. In some cases, however, it is advantageous to apply the parts of the plants which are mixed with the adhesive point by point, if appropriate following a predetermined pattern. Such a procedure is particularly suitable for fixing established plants to form certain patterns and thus convey more an impression of a designed roof garden.

In a preferred embodiment of the process according to the invention, at least some of binder used is a polymer which is foamed before the adhesive is finished and before it is mixed with parts of plants. The polymer foam is advantageously prepared mechanically with a suitable polymer dispersion, for example a Acronal® dispersion to which a customary stabilizer and a customary foam-forming agent (wetting agent) are added, using a dissolver disc. The parts of the plants are mixed with the adhesive, at least part of which has been foamed, after the polymer foam has been mixed with a further binder, if required, such as, for example, starch, and filler and/or fertilizer. This results in a uniform distribution of the polymer binder; the bulky foam covers the parts of the plants, for example seeds or rooting shoots, completely, thus imparting a particularly good protection against mechanical effects and the effects of weather immediately after application to the sheet of mineral wool.

The polymer foam is only prepared shortly before application and, if appropriate, is mixed with the remaining components of the adhesive and the parts of the plants. After some time, the foam breaks; it then forms an inhomogeneous coating on the parts of the plants, thus holding them on the sheet of mineral wool together with the remaining components of the adhesive, for example fillers, without forming a homogeneous coating on the parts of the plants. This ensures access of air and water to the parts of the plants. More detailed examinations have revealed that the individual foam bubbles can form a saucer-type pattern upon bursting which becomes attached to the parts of the plants and the mineral wool fibres in a reticulated manner; this allows free access for air and water.

The starch and/or the polymer decompose some time after they have been used for holding the parts of the plants in place on the sheet of mineral wool, so that the plants and all shoots are exposed to the atmosphere. Both the starch and the polymer which has been employed, preferably in the form of a foam, form nutrients upon decomposition, which can be absorbed by the plant, which is fully rooted by now. However, since decomposition only takes place after some weeks, the decomposition products do not form an unduly high amount of plant fertilizer as in the abovementioned case, in which the adhesive contained organic waste materials, such as grape seeds, bone-meal and the like as essential component.

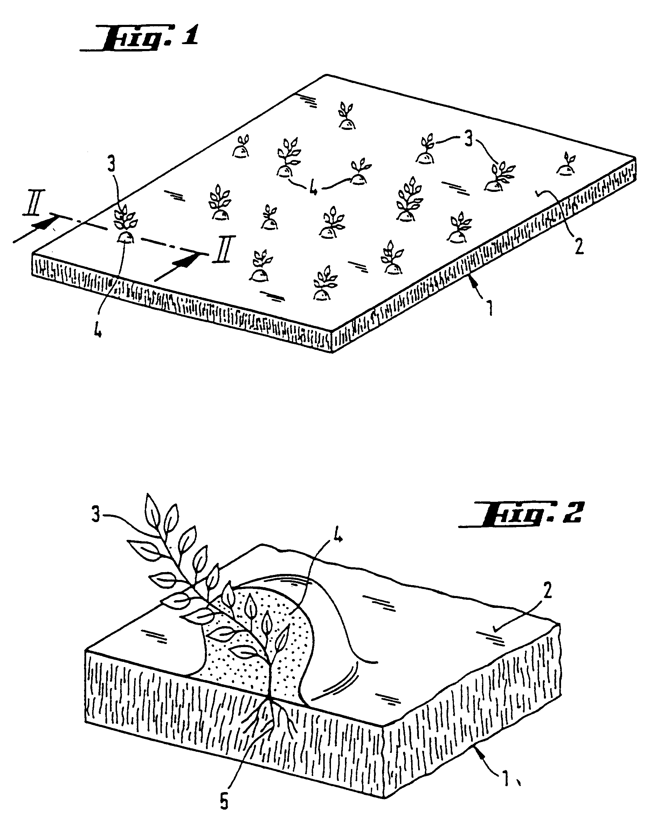

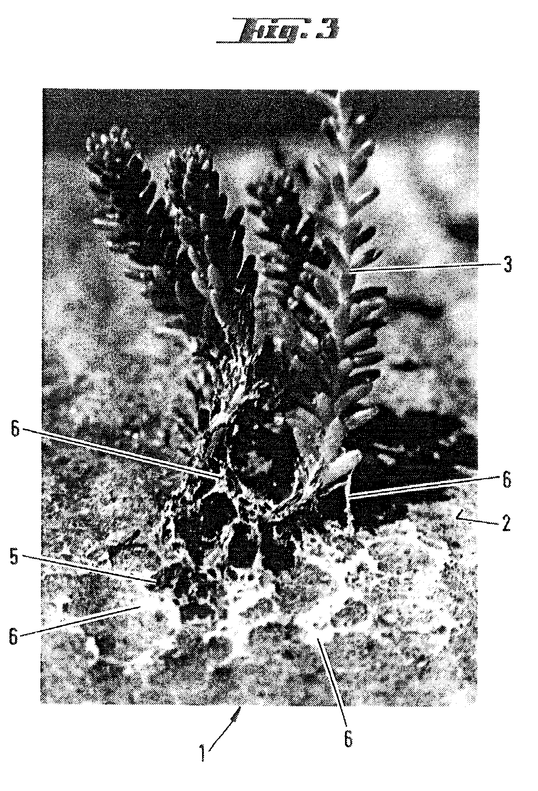

An exemplary embodiment of the invention is illustrated with the aid of Figures 1 and 2:
Fig. 1 shows a sheet of mineral wool with sedum shoots held in place thereon, and
Fig. 2 shows in detail how a sedum shoot is held in place on the sheet of mineral wool.
Fig. 3 shows a further embodiment.

The sheet of mineral wool, which is identified with 1 in Fig. 1, is composed of mineral wool and has arranged on its surface 2 a plurality of plant shoots 3, each of which is held in place on the surface 2 by means of an adhesive 4. It can be seen clearly, in particular from the detail shown in Fig. 2, that the plant shoots 3 are coated to a large extent by the adhesive 4. In the present case, the part of the plant 3 shown is a sedum shoot, which has already grown out of the adhesive 4 in the form of a lump and has already struck roots 5. However, it is also possible to cover the parts of the plants 3 completely with the adhesive 4, since field trials have shown that the growing parts of the plants rupture the continuous adhesive film, the individual sheets of mineral wool thus being uniformly covered in vegetation.

Adhesive 4 is based on the following formula:
- 33.05% by weight: of aqueous Acronal® dispersion (45%)
- 1.04% by weight: of foaming agent W 53
- 0.4 % by weight: of stabilizer PS 1 and
- 65.51% by weight: of water.

In a different example, the following formula was used for adhesive 4:
- 33.05% by weight: of aqueous Acronal® dispersion (45%)
- 1.04% by weight: of foaming agent W 53
- 0.4 % by weight: of stabilizer PS 1,
- 40.0 % by weight: of peat and water as the remainder.

A different example of adhesive 4 is composed as follows:
- 12.0 % by weight: of starch,
- 8 % by weight: of aqueous Acronal® dispersion (45%)
- 35 % by weight: of peat and
- 45 % by weight: of water.

The sheets, which are composed of mineral wool and binder, are laid abutting edge to edge over the entire roof area designed to sustain vegetation, giving an overall impression of a green roof surface, it also being possible to graduate the colour of this roof surface, depending on the colour of the parts of the plants and their arrangement. A sheet of mineral wool which will be covered in vegetation is obtained in a simple manner by the parts of the plants which are attached according to the invention.

## Claims

1. Sheet of mineral wool (1) with an improved water retention capacity for sustaining vegetation on roofs, which holds parts of plants (3) in place on the surface (2) of the sheet (1) facing away from the roof, said parts of plants (3) are attached to the surface (2) of said sheet (1) by means of an organic polymer-containing adhesive (4) which is insoluble in water
characterized in that
said polymer-containing adhesive (4) has the form of a foam, said foam admitting air and water and initially immobilizing said parts of plants (3) without impeding growth of said parts of plants (3), particularly penetration of the plant roots into the sheet (1).

2. Sheet according to Claim 1, characterized in that said polymer-containing adhesive (4) is not resistant to ageing.

3. Sheet according to Claim 1 or 2, characterized in that said polymer-containing adhesive (4) contains fillers, such as peat and/or fertilizers.

4. Sheet according to any one of Claims 1 to 3, characterized in that it contains at least one polysaccharide product which is insoluble in cold water, so as to improve the water retention capacity.

5. Sheet according to any one of Claims 1 to 4, characterized in that the fibres within the sheet (1) run essentially at right angles to the surface (2) provided with said parts of plants (3).

6. Sheet according to any one of Claims 1 to 5, characterized in that said polymer-containing adhesive (4) having the form of a foam covers as a coating a wide area.

7. Sheet according to any one of Claims 1 to 6, characterized by an adhesive base coat on the surface (2) of the sheet (1) which faces away from the roof.

8. Process for the preparation of a sheet according to any one of Claims 1 to 7,
characterized in that
parts of plants (3) mixed with said polymer-containing adhesive (4) are applied to the sheet (1), said polymer-containing adhesive (4) being foamed before it is mixed with said parts of plants (3).

9. Process according to Claim 8, characterized in that said parts of plants (3) are immobilized individually by means of a foam-forming spray gun.

10. Process according to Claim 8, characterized in that said parts of plants (3) which are optionally mixed with more polymer-containing adhesive (4) having the form of a foam are applied to a sheet (1), which is provided with an adhesive base coat.

## Patentansprüche

1. Platte (1) aus Mineralwolle mit erhöhtem Wasserrückhaltevermögen zur Begrünung von Dächern, die auf der dem Dach abgewandten Oberfläche (2) der Platte (1) Pflanzenteile (3) trägt, wobei die Pflanzenteile (3) mittels eines wasserunlöslichen, Kunststoff enthaltenden Haftmittels (4) auf die Oberfläche (2) der Platte (1) geklebt sind,
dadurch gekennzeichnet, daß
das Kunststoff enthaltende Haftmittel (4) in Form eines Schaumes vorliegt, der für Luft und Wasser durchlässig ist und die Pflanzenteile (3) anfangs fixiert, ohne das Wachstum der Pflanzenteile (3), insbesondere das Eindringen der Wurzeln der Pflanzen in die Platte (1), zu behindern.

2. Platte nach Anspruch 1, dadurch gekennzeichnet, daß das Kunststoff enthaltende Haftmittel (4) nicht alterungsbeständig ist.

3. Platte nach Anspruch 1 oder 2, dadurch gekennzeichnet, daß das Kunststoff enthaltende Haftmittel (4) Füllstoffe wie Torf und/oder Dünger enthält.

4. Platte nach einem der Ansprüche 1 bis 3, dadurch gekennzeichnet, daß sie zum Zwecke des erhöhten Wasserrückhaltevermögens mindestens ein kaltwasserunlösliches Polysaccharidprodukt enthält.

5. Platte nach einem der Ansprüche 1 bis 4, dadurch gekennzeichnet, daß der Faserverlauf innerhalb der Platte (1) im wesentlichen senkrecht zu der mit den Pflanzenteilen (3) bestückten Oberfläche (2) gerichtet ist.

6. Platte nach einem der Ansprüche 1 bis 5, dadurch gekennzeichnet, daß das in Form eines Schaumes vorliegende, Kunststoff enthaltende Haftmittel (4) als breitflächige Beschichtung ausgebildet ist.

7. Platte nach einem der Ansprüche 1 bis 6, gekennzeichnet durch eine Haftmittelgrundierung auf der dem Dach abgewandten Oberfläche (2) der Platte (1).

8. Verfahren zur Herstellung einer Platte nach einem der Ansprüche 1 bis 7,
dadurch gekennzeichnet, daß
Pflanzenteile (3), die mit dem Kunststoff enthaltenden Haftmittel (4) vermischt sind, auf die Platte (1) aufgebracht werden, wobei das Kunststoff enthaltende Haftmittel (4) vor dem Vermischen mit den Pflanzenteilen (3) aufgeschäumt wird.

9. Verfahren nach Anspruch 8, dadurch gekennzeichnet, daß die Pflanzenteile (3) mittels einer schaumbildenden Sprühpistole einzeln fixiert werden.

10. Verfahren nach Anspruch 8, dadurch gekennzeichnet, daß die Pflanzenteile (3), die gegebenenfalls mit weiterem schaumförmigen, Kunststoff enthaltenden Haftmittel (4) vermischt sind, auf eine mit einer Haftmittelgrundierung versehenenen Platte (1) aufgebracht werden.

## Revendications

1. Feuille de laine minérale (1) dotée d'une capacité de rétention d'eau améliorée pour entretenir une végétation sur les toits, qui maintient des parties de plantes (3) en place sur la surface (2) de la feuille (1), éloignée de celle qui est en contact avec le toit, ces parties de plantes (3) sont attachées à la surface (2) de cette feuille (1) au moyen d'un adhésif (4) contenant un polymère organique qui est insoluble dans l'eau, caractérisée en ce que cet adhésif (4) contenant un polymère a la forme d'une mousse, cette mousse laissant passer l'air et l'eau et immobilisant initialement ces parties de plantes (3), sans empêcher la croissance de ces parties de plantes (3), en particulier la pénétration des racines des plantes dans la feuille (1).

2. Feuille suivant la revendication 1, caractérisée en ce que cet adhésif (4) contenant un polymère n'est pas résistant au vieillissement.

3. Feuille suivant les revendications 1 ou 2, caractérisée en ce que cet adhésif (4) contenant un polymère contient des charges comme de la tourbe et/ou des engrais.

4. Feuille suivant l'une quelconque des revendications 1 à 3, caractérisée en ce qu'elle contient au moins un polysaccharide qui est insoluble dans l'eau froide de façon à améliorer la capacité de rétention d'eau.

5. Feuille suivant l'une quelconque des revendications 1 à 4, caractérisée en ce que les fibres à l'intérieur de la feuille (1) sont essentiellement dirigées à angle droit par rapport à la surface (2) pourvue de ces parties de plantes (3).

6. Feuille suivant l'une quelconque des revendications 1 à 5, caractérisée en ce que cet adhésif (4) contenant un polymère ayant la forme d'une mousse recouvre une grande surface en tant que revêtement.

7. Feuille suivant l'une quelconque des revendications 1 à 6, caractérisée par un revêtement de base adhésif sur la surface (2) de la feuille (1) qui est éloignée du toit.

8. Procédé pour la préparation d'une feuille suivant l'une quelconque des revendications 1 à 7, caractérisé en ce que des parties de plantes (3) mélangées à cet adhésif (4) contenant un polymère sont appliquées à la feuille (1), cet adhésif (4) contenant un polymère étant moussé avant d'être mélangé avec des parties de plantes (3).

9. Procédé suivant la revendication 8, caractérisé en ce que ces parties de plantes (3) sont immobilisées individuellement au moyen d'un pistolet pulvérisateur formant de la mousse.

10. Procédé suivant la revendication 8, caractérisé en ce que ces parties de plantes (3) qui sont éventuellement mélangées avec d'avantage d'adhésif (4) contenant un polymère ayant la forme d'une mousse sont appliquées à la feuille (1) qui est pourvue d'un revêtement de base adhésif.
